# EUROPEAN PATENT SPECIFICATION

(11) **EP 2 274 198 B1**
(45) Date of publication and mention of the grant of the patent: **23.08.2017**
(21) Application number: 09742408.9
(22) Date of filing: 11.05.2009
(51) Int. Cl.: B63B 35/44, B63B 35/38, B63B 5/18

(54) **FLOATING BUILDINGS**
SCHWIMMENDE GEBÄUDE
BÂTIMENTS FLOTTANTS

(30) Priority: 09.05.2008 GB 0808459
(43) Date of publication of application: 19.01.2011
(73) Proprietor: Hydro Property Holdings Limited, Douglas Isle of Man IM1 2SH (GB)
(72) Inventor: NELSON, Carl R., Reading Berkshire RG7 1BZ (GB)
(74) Representative: Boult Wade Tennant
(86) International application number: PCT/GB2009/050498
(87) International publication number: WO 2009/136212

(56) References cited:
- EP-A- 0 905 324
- WO-A-83/02126
- BE-A- 453 626
- DE-A1- 3 520 181
- FR-A- 2 076 761
- US-A- 3 951 085
- US-A- 4 406 243
- US-A- 4 565 149
- US-B1- 6 199 502

## Description

### Field of the invention

The present invention relates to floating buildings. In particular, the invention relates to a floating base for a building according to the preamble of claim 1.

### Background to the invention

In modern urban environments, the development and construction of large buildings for residential, commercial, leisure or industrial use can often be beset with problems.

For example, suitable land for development can be difficult to find. In many cities, large pieces of development land seldom become available, which can restrict the choice of location. However, particularly for commercial developments such as hotels, location is an extremely important factor. Even if a suitably-sized site in an appropriate location can be identified, the cost of the land may be prohibitively high.

In most cases, a site will have been developed previously. Consequently, existing buildings on the land may need to be demolished, and existing services and underground structures (such as drainage pipes, sewers, service ducts, electricity and gas supplies) may need to be preserved or re-routed.

The above problems have led to the use of bodies of water as development sites. Often, cities are located adjacent to rivers, lakes, or the sea. In many of these cities, the area close to the waterline or shoreline has become highly desirable and attractive, particularly for high-value commercial or residential development. Former port areas such as docks may be particularly valued.

One approach to building on bodies of water is to re-claim land. In other words, an area of water is converted to land by drainage, infilling or other means, and the land is subsequently built upon. However, land reclamation is expensive, permanent, and dramatically alters the environment. In particular, land reclamation may remove particularly attractive waterfront. Consequently, land reclamation is not suitable for many developments.

An alternative approach is to build on raised decks or platforms supported on structures which are anchored or set in to the river, lake or sea bed. Examples include buildings constructed on piers, and homes built on stilt-like pillars. In these cases, the platform, and hence the base of the building, must be relatively high above the mean waterline, so as to ensure that the building remains above the water. As a result, a part of the anchoring and supporting structure is often visible beneath the building, which can be unsightly. Furthermore, the weight of the building is limited to that which can be borne by the supporting structure.

A still further approach is to design or adapt a boat or similar vessel for commercial or residential development. Such vessels are usually semi-permanently moored in a suitable location adjacent to land, and access and services are connected to the vessel from the shore, river bank or quayside. Examples include houseboats, prison ships, and the adaptation of cruise ships or other vessels for use as floating hotels or entertainment venues.

Such vessels are, however, inflexible in many ways. For example, the internal architecture of an adapted vessel may be difficult or costly to change, so that the layout of the development is compromised compared to a new-build development. Similarly, the external appearance of the vessel usually remains identifiable as a boat or ship, which will be inappropriate for many developments. Furthermore, the size and weight of the development is dictated by the underlying vessel and is therefore subject to the engineering constraints of boat-building rather than land-based construction. This can restrict the permissible size of vessel-based developments, as can the difficulty of fitting or manoeuvring a large vessel in a confined space.

Floating or floatable buildings, which are not based on vessels, are also known. For example, US Patent No. 6 199 502 describes the use of connectable concrete flotation modules with polystyrene cores to create a floating pontoon on which structures can be supported. The flotation modules are designed to be transportable by land vehicles, so that a large number of modules are required to create a floating platform of modest size, and the weight that can be supported by the platform is limited.

In other examples, houses and other buildings which are built on areas susceptible to flooding may include buoyant elements which serve to lift the building when the water level rises. In this way, flooding of the building is avoided. For instance, US Patent No. 5 647 693 describes a floatable building having a watertight concrete basement of unitary construction which provides buoyancy in the event that the site of the building is flooded. As in a conventional building with a basement, the walls of the basement structure support the floor joists and walls of the building above. This limits design freedom and compromises access to the basement. The basement is constructed at the site of the building, and remains in place after construction until floodwater raises the building.

DE 35 20 181 A1 represents the closest prior art and discloses a floating base according to the preamble of claim 1.

### Summary of the invention

According to a first aspect of the present invention, there is provided a floating base for a building, the base comprising at least one buoyant basement unit defining a basement level, and a reinforced concrete transfer slab atop the or each basement unit. The basement level provides habitable or functional space for the building, and the transfer slab has at least one access opening giving access to the basement level. One or more basement units includes one or more windows openings for receiving windows and the transfer slab forms a lintel above the or each window opening.

Further aspects of the invention are disclosed in dependent claims 2-20.

In the following, the term "embodiment" refers to illustrative example and not necessarily to claimed subject matter. In one embodiment, the floating base comprises at least two buoyant basement units, wherein each of the basement units is independently buoyant for assembly with at least one other basement unit during construction of the base, said basement units thereby assuming a final position in which said units are closely adjacent or in contact to define a basement level comprising two or more of said units.

In this way, the basement level advantageously provides accessible and usable space, which may be enhanced by windows for light and ventilation. Furthermore, by virtue of the modular construction of the base, large floating buildings with accessible space in the base can be readily constructed.

In one embodiment, the floating base comprises a plurality of ties, each tie extending partly within the transfer slab. The ties may be connected to the reinforcement of the transfer slab.

Preferably, the ties extend from one or more basement units into the transfer slab, so as to securely connect the transfer slab to the or each basement unit. The ties may, for example, be cast into one or more basement units during construction of said units, or may be bolted or otherwise affixed to the or each basement unit.

Optionally, the ties may extend from the transfer slab into one or more basement units. In this case, the ties may be inserted into holes drilled in one or more basement units, and the ties may be retained in the holes by an adhesive filler, such as a resin grout or mortar.

Where a part of a tie extends within a basement unit, that part of the tie is approximately 400 mm to 750 mm in length. Preferably, the ties comprise reinforcing bars.

The transfer slab preferably comprises a lightweight reinforced concrete slab. For example, the transfer slab may include an array of voids, optionally formed by an array of void formers. In this way, the mass of the floating base can be kept to a minimum, and the centre of gravity can be low in the base so as to provide stability to the base.

Advantageously, the transfer slab comprises a plurality of slab elements. One or more of the slab elements may lie atop one or more basement units. For example, a group of two or more slab elements may lie atop one or more basement units.

Two or more of the slab elements may be adjacent to one another to define a junction therebetween. The slab elements may be connected across the junction by reinforced concrete. When two or more basement units are provided, the junction is optionally positioned where two adjacent or contacting basement units are at their closest.

Junction reinforcement may be provided to reinforce the junction between the slab elements. In one embodiment, the junction reinforcement comprises horizontal reinforcing bars which span the junction between the slab elements. The horizontal reinforcing bars may extend into each of the adjacent slab elements. The horizontal reinforcing bars, when provided, preferably extend at least 900 mm into each of the adjacent slab elements. The junction reinforcement may, alternatively or in addition, comprise reinforcing bars which extend in planes parallel to the junction between the slab elements. The junction reinforcement is preferably connected to the reinforcement of one or both of the adjacent slab elements.

In some embodiments of the invention, at least two basement units are adjacent to one another and a gap is defined therebetween. The adjacent basement units may be connected across the gap by connection means, such as a plurality of connection members attached to the adjacent basement units. The connection members may be arranged in a frame comprising at least two vertically-spaced horizontal members which span the gap between the adjacent basement units. The frame may further comprise two or more vertically-extending brackets for attachment to the respective adjacent basement units. The frame may be attached to the basement units with bolts which extend into walls of the basement units.

When a gap between basement units is present, the gap is preferably at least approximately 300 mm wide. Conveniently, the gap may define a passage for access to the adjacent basement units and the transfer slab. For example, the gap may provide access for divers for inspection, repair or maintenance of the base. Preferably, the gap is approximately 600 mm wide to allow sufficient space for access.

When the transfer slab comprises a plurality of slab elements, one or more of the slab elements may overhang the gap between the adjacent basement units. For example, two slab elements which lie atop the two respective adjacent basement units may meet above the gap. At least one slab element may lie atop both adjacent basement units and extends across the gap.

In some embodiments of the invention, at least two basement units may be in contact. The contacting basement units may be connected to one another by connection means, for example one or more connection members which extend through adjacent walls of the contacting basement units. The connection members may comprise threaded bars and associated nuts which clamp the contacting basement units together.

One or more basement units include one or more window openings for receiving windows, for example to provide natural light and/or ventilation to the basement level. When windows are provided, the transfer slab conveniently form a lintel above the or each window opening, so that no additional lintel is required. The or each window opening may be at least 200 mm above the water line in use of the base.

The floating base may comprise a breakwater attached to the exterior of one or more basement units. Preferably, the breakwater is located just above the waterline in use of the base. In one arrangement, the breakwater forms a walkway around a part or all of the base.

The floating base may comprise guide means for preventing horizontal movement of the base. The guide means may comprise locating means which are fixed relative to the body of water, and engagement means arranged to engage with the locating means. The engagement means may, for example, comprise rollers arranged in rolling contact with the locating means, or sliders arranged in sliding contact with the locating means.

The locating means may comprise piles set into the bed of the body of water in which the base floats, and conveniently the piles house apparatus for extracting heat from the bed of the body of water for supply to the building, such as ground source heating apparatus.

The basement units are preferably reinforced concrete which, advantageously, is approximately 300 mm thick. However, it is conceivable that the basement units could be formed of other materials, such as steel.

Preferably, the or each basement unit comprises a floor and upstanding walls to define rooms in the basement level. Optionally, the floor is generally rectangular in plan, so that the rooms may be generally cuboidal.

One or more basement units may comprise insulating means to insulate rooms of the basement level. The insulation may be carried on internal surfaces of the walls. Plasterboard or similar finishing materials can, if desired, be affixed to internal surfaces of the walls of the basement level.

When of reinforced concrete construction, the walls of a basement unit can be made by casting concrete into a formwork mould which defines the shape of the wall. Typically, the formwork comprises plywood shuttering supported on scaffolding. However, in another embodiment, one or more of the walls comprises parallel wall panels spaced from one another to define a core region of the wall. Advantageously, the wall panels comprise pre-cast concrete panels, which can conveniently be manufactured off-site. In this way, the requirement to use formwork to define the shape of the walls can be reduced or eliminated and the time required for constructing the basement units on site is reduced. The core region of the wall is preferably filled with reinforced concrete to provide the necessary strength, although it is conceivable that a lightweight filling material could be used in some applications.

The floating base is particularly advantageous in providing a load-bearing platform to support the weight of a superstructure atop the base. Accordingly, in a floating building comprising a floating base in accordance with the invention, and a superstructure atop the floating base, the transfer slab provides a load-bearing platform to distribute the weight of the superstructure across the or each basement unit.

The floating building may comprise anchoring means to anchor the superstructure to the transfer slab. The anchoring means may, for example, comprise bolts set in to the transfer slab.

The floating base provides a mechanically uniform platform upon which a superstructure of substantially any design and construction can be built. The weight of the superstructure is distributed across the base by the transfer slab, so there need be no correspondence between the position of the load-bearing parts of the superstructure and the position of features within the basement structure. Thus, the present invention offers a flexible and adaptable way of constructing floating buildings.

Accordingly, the superstructure may be positioned centrally on the transfer slab, or alternatively the superstructure may be positioned off-centre with respect to the transfer slab. In either case, the superstructure may have walls or columns that are misaligned with walls of the basement units.

The floating building may further comprise ballast means arranged so that the transfer slab is substantially horizontal. In this way, if the mass of the superstructure is positioned off-centre with respect to the transfer slab, the floating building can be arranged to be level. The ballast means may, for example, comprise ballast weights housed within the superstructure or the floating base or, when two or more basement units are provided, one or more of the basement units may have a large mass relative to the remainder of the basement units to provide the ballast means.

As well as providing support for the superstructure, the transfer slab can act as a fire barrier. Thus, if a fire were to break out in the basement level, unlike an open-framed load bearing structure, the transfer slab would act to slow passage of fire up into the superstructure. Consequently, the basement level can be arranged to house plant for the building, such as equipment associated with electricity generation, metering or distribution, gas supply, water treatment, waste processing and so on. An example of method is provided for constructing a floating base for a building. The method comprises assembling, in a body of water, one or more buoyant basement units to define a basement level, said basement level being capable of providing habitable or functional space for a building to be constructed on the base, and casting a reinforced concrete transfer slab across the tops of the or each basement unit while maintaining access to the basement level through the transfer slab.

Advantageously, the method further comprises arranging reinforcing means across the tops of the basement units, and casting the transfer slab so as to incorporate the reinforcing means.

A preferred expression of the method comprises assembling, in the body of water, at least two independently-buoyant basement units closely adjacent to or in contact with one another to define a basement level comprising two or more of said units. By virtue of this method, large floating bases can be constructed for substantially any size of building. Conveniently, the method comprises arranging the reinforcing means by placing slab elements having a matrix of reinforcing bars across the top of the or each basement unit. The transfer slab may be cast so as to incorporate reinforcing means extending from the or each basement unit. The reinforcing means of the transfer slab may be connected to the reinforcing means extending from the or each basement unit. Each slab element may comprise a slab base having cut-outs for accepting the reinforcing means extending from the or each basement unit during placing of the slab elements, in which case the slab base is preferably pre-cast before construction of the building, and the cut-outs are optionally formed during manufacture of the slab element.

The method may comprise inserting reinforcing bars into the or each basement unit through the slab elements, and may further comprise forming holes in the or each basement unit for insertion of the reinforcing bars. Each slab element may comprise a slab base and the method may further comprise forming holes in the slab base for insertion of the reinforcing bars.

The holes may be formed after the slab elements are placed across the top of the or each basement unit. Preferably, the reinforcing bars are inserted in the basement units to a depth of at least 300 mm. The reinforcing bars may be fixed in the holes using an adhesive filler. If the slab elements include an array of void formers, the method may further comprise removing one or more void formers for insertion of the reinforcing bars. In these ways, the transfer slab can be solidly connected to the or each basement unit by way of internal reinforcing bars. In other words, the floating base can, if desired, be made as a unitary reinforced concrete structure to provide strength and stability.

The method may further comprise placing additional reinforcing means in a junction between two adjacent slab elements, in which case the additional reinforcing means are preferably connected to the reinforcing bars of the slab elements.
Where two or more basement units are assembled in the body of water, the method may comprise connecting the basement units to one another before casting the transfer slab. For example, the method may include arranging connection members to connect the basement units, such as bolting the connection members to the basement units, and/or inserting the connection members into the basement units.

The method may comprising arranging panels in a parallel spaced-apart configuration to construct walls of a basement unit. Optionally, the method further comprises filling the space between the panels with concrete.
It will be appreciated that the floating base and, correspondingly, the basement units can be large in size and weight. The method described above advantageously allows for a modular construction of the base, so that a large base can be constructed from a number of smaller basement units, sized appropriately for manufacturing and transportation. However, it is desirable to provide a method for launching large basement units.

Accordingly, an example of method for launching a buoyant basement unit is provided. The method comprises constructing the basement unit on a supporting surface above a plurality of liftable support members, lifting the support members against the basement unit by means of the support members, lifting the basement unit from the supporting surface to an extent sufficient for the basement unit to be moved across the supporting surface, and moving the basement unit on the support members to float in a body of water.

Preferably, the support members are rollers, which optionally rotate around roller axes arranged generally parallel to one another and perpendicular to the direction of movement of the basement unit. In this way, the roller axes may define a path from the surface to the body of water. Accordingly, the roller axes preferably lie generally parallel to the periphery of the body of water. The support members may also, or alternatively, be sliders.

The support members may be lifted by hydraulic or pneumatic means. For example, the method may comprise lifting the support members by inflating air jacks. The basement unit may be lifted clear of the supporting surface.

The method may comprise moving the basement unit using a water craft or a land vehicle. Preferably, however, the method comprises using both a water craft and a land vehicle in a coordinated manner to move the basement unit. The method may include towing the floating basement unit to a construction site after launching.

### Brief description of the drawings

Embodiments of the present invention will now be described, by way of example only, with reference to the accompanying drawings, in which like reference signs are used for like features and in which:
Figure 1(a) is a front elevation of a building according to an embodiment of the present invention;
Figure 1 (b) is a side elevation of the building of Figure 1 (a);
Figure 1(c) is a cross-sectional view of the building of Figures 1(a) and 1(b);
Figure 2 is a schematic cross-sectional view of another building according to the invention;
Figure 3 is an exploded perspective view of part of the building of Figure 2, showing basement units and a transfer slab;
Figure 4 is an enlarged cross-sectional view of part of the building of Figure 2, showing details of the basement units, transfer slab and anchoring arrangement;
Figure 5 is a cross-sectional view showing, in part, a window unit mounted between a basement unit and a transfer slab in a fourth embodiment of the present invention;
Figure 6 is a more detailed cross-sectional view showing the window unit of Figure 5, together with part of a superstructure of the building atop the transfer slab;
Figures 7(a) to 7(e) are schematic cross-sectional diagrams showing steps in a method of launching basement units suitable for use in the present invention;
Figures 8(a) and 8(b) are schematic cross-sectional diagrams showing apparatus used in the launching method of Figures 7(a) to 7(e) in more detail;
Figure 9 is a perspective diagram showing the method of Figures 7(a) to 7(e);
Figure 10 is a cross-sectional view showing connections between abutting basement units;
Figure 11 is a plan view of four basement units arranged in a non-abutting configuration;
Figure 12 is a vertical sectional view of a connecting element mounted on the four basement units of Figure 11;
Figure 13 is a cross-sectional view from above of the mounted connecting element of Figure 12;
Figure 14(a) is a side sectional view of parts of two transfer slab elements mounted, in a first arrangement, on non-abutting basement units;
Figure 14(b) is a perspective view showing one of the transfer slab elements of Figure 14(a) being mounted onto a basement unit;
Figure 15 is a cross-sectional view showing transfer slab elements mounted, in a second arrangement, on abutting basement units;
Figure 16(a) is a side sectional view of parts of two transfer slab elements mounted, in a third arrangement, on non-abutting basement units;
Figure 16(b) is a perspective view showing one of the transfer slab elements of Figure 16(a) being mounted onto a basement unit;
Figure 17 is a plan view showing transfer slab elements in place on the basement units of Figure 11;
Figure 18 is a side sectional view of part of a basement unit for use in another embodiment of the present invention;
Figure 19(a), Figure 19(b) and Figure 19(c) are side, end and plan views respectively of panels for use in the wall of a basement unit of the type shown in Figure 18;
Figure 20 is a cross-sectional view from above of part of a wall of a basement unit of the type shown in Figure 18;
Figure 21 is a detail cross-sectional view from above of a connecting element mounted on a corner of a basement unit of the type shown in Figure 18; and
Figure 22 is a side sectional view of part of a transfer slab mounted on two non-abutting basement units of the type shown in Figure 18.

### Detailed description of the invention

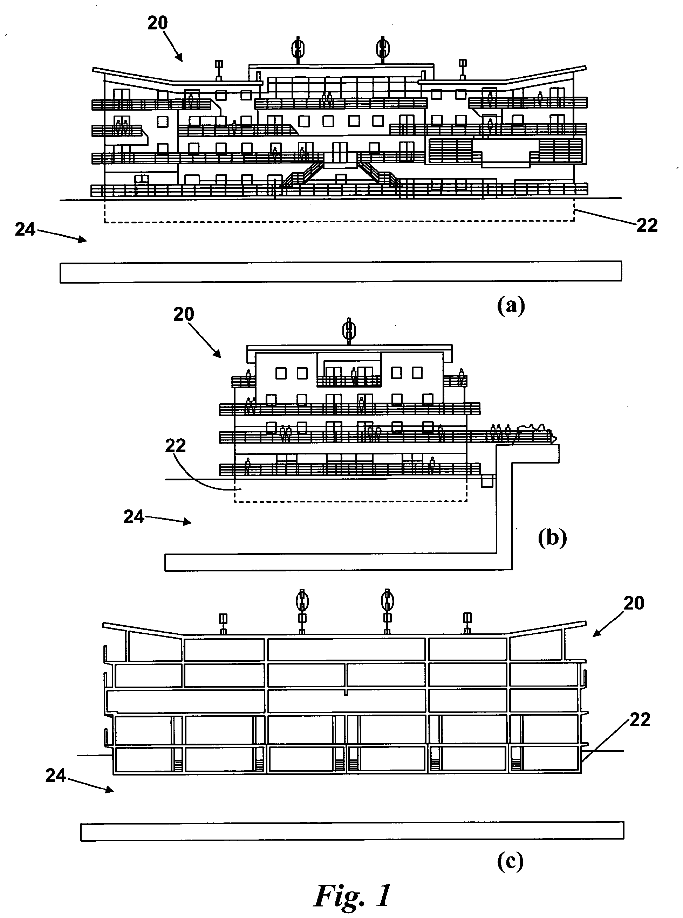

Figures 1(a) to 1(c) show a building according to the present invention. The building comprises, in broad terms, a superstructure 20 which is built atop a buoyant basement structure 22 which floats in a body of water 24, such as river, dock, harbour, lake, sea and so on. The buoyant basement structure 22 therefore provides a floating base upon which the superstructure 20 is constructed and supported. The basement structure 22 is shown partially submerged in water in Figures 1(a) to 1(c).

In this example, the building is arranged to provide hotel facilities, including bedrooms, bathrooms, communal areas such as leisure facilities and restaurants, and service areas such as kitchens, laundries and plant rooms. Additionally, access routes between the various rooms and spaces are provided.

Although the example of a floating hotel will be used throughout the remainder of this description, it will be appreciated that such a building could be used for substantially any function, such as residential accommodation, offices, shops, storage, industry and so on, and that the building could house a number of different functions.

In the present example, the superstructure 20 contains a majority of the rooms, access routes and other areas. However, some of the rooms are accommodated within the basement structure 22. At least part of the basement structure 22 therefore provides an accessible, habitable space that is useful for a function other than mere void space or providing buoyancy. For example, the basement structure 22 may house offices, plant rooms and storage rooms.

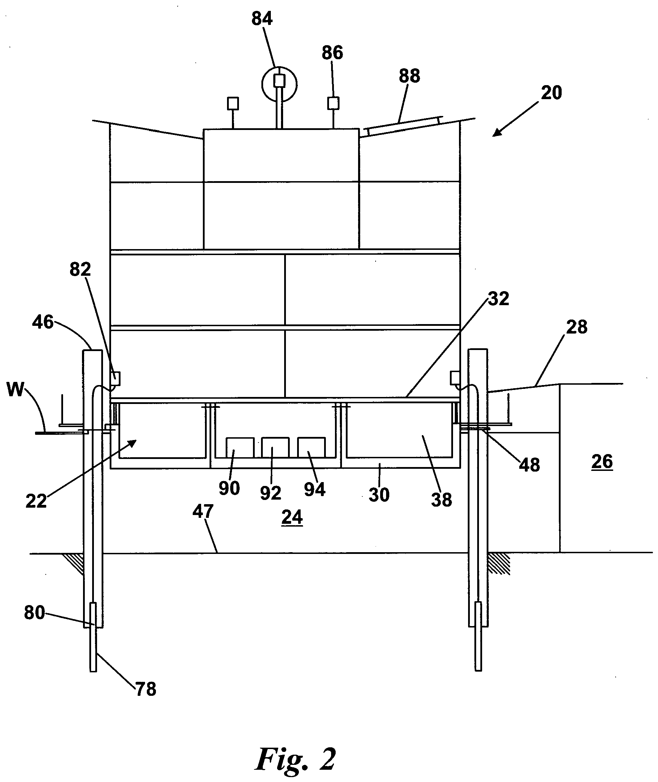

Figure 2 is a cross-sectional view of another building according to the invention. The building comprises a buoyant basement structure 22 floating in a body of water 24, and a superstructure 20 which is built upon the basement structure 22. In this embodiment, the building is located in a body of water 24 adjacent to a quay 26. The building is accessed via one or more ramps or bridges 28 which extend from the quay 26 to the building.

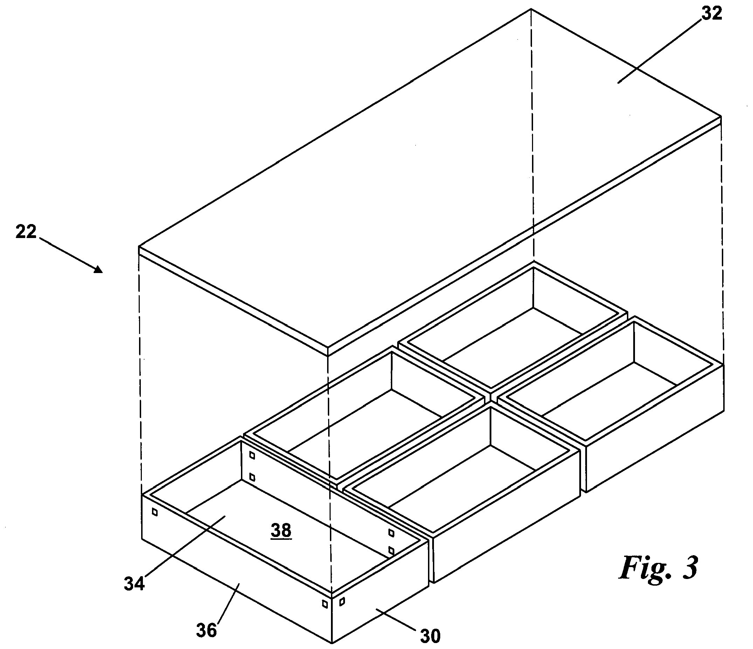

Referring additionally to Figure 3, the buoyant basement structure 22 comprises a plurality of basement units 30 and a transfer slab 32 atop the basement units 30. Each basement unit 30 comprises a rectangular floor section 34 and four rectangular upstanding walls 36, forming an open-topped box structure. Each basement unit 30 therefore defines, in part, a basement space 38. Each of the basement units 30 is of unitary construction and is made from reinforced concrete. By virtue of their unitary construction, the basement units are resistant to leakage, so that the basement space 38 is watertight. The thickness of concrete forming the walls 36 and floors 34 of the basement units 30 is, in this example, approximately 300 mm.

When the basement units 30 are placed into the water 24, the weight of the basement unit 30 is balanced by buoyancy forces due to the displaced water. Consequently, the basement units 30 float in water, and a portion of each semi-submerged basement unit 30 remains exposed above the water line (labelled 'W' in Figure 2).

Each basement unit 30 is designed so that the top faces 40 of the basement units 30 all lie in the same plane at a desired height above the water line. Additional ballast weight (not shown) may be added to some or all of the basement units 30 to achieve the correct height of exposure above the water line.

As shown in Figure 3, the basement structure 22 further comprises a transfer slab 32 which spans across the open tops 40 of the basement units 30. The bottom face of the transfer slab rests upon and is attached to the tops of the side walls 36 of each of the basement units 30, as will be described in more detail later. In this way, the transfer slab 32 closes the open tops of the basement units 30 to enclose each of the basement spaces 38.

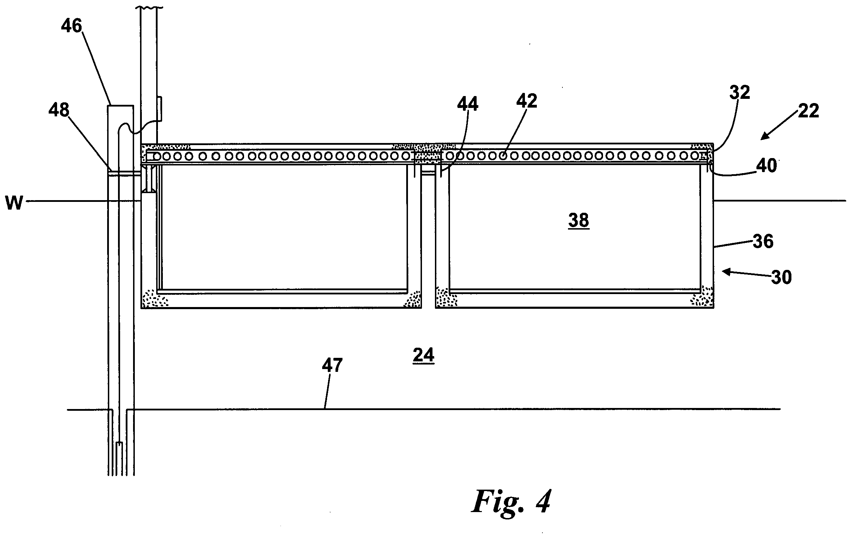

Figure 4 is a cross-sectional view of a structure similar to that shown in Figure 2, showing the basement structure 22 in more detail, with the transfer slab 32 in position and spanning across the top faces 40 of the basement units 30.

The transfer slab 32 is a lightweight reinforced concrete slab, for example of the type marketed under the registered trade mark BubbleDeck. The slab 32 contains a plurality of void formers 42, in the form of hollow plastic spheres, arrayed within a lattice of reinforcing bars (not shown in Figure 4). The reinforcing bars and void formers 42 are set within a concrete matrix.

The transfer slab 32 is permanently attached to each of the basement units 30. The connections between a basement unit 30 and the transfer slab 32 consist of reinforcing bars 44 which extend upwardly from the side walls 36 of the basement unit and into the transfer slab 32. Furthermore, the concrete of the transfer slab 32 is cast directly onto the top faces 40 of the basement units 30 to form the connections. In this way, the transfer slab 32 and the basement units 30 can be considered as a continuous reinforced concrete basement structure.

To afford access to the basement spaces 38, openings (not shown in Figure 4) are provided in the transfer slab 32. Staircases (not shown in Figure 4) to the basement spaces 38 can be routed through these access openings. Other access means, such as escalators and elevators, may also be provided through the access openings. Additional openings may be provided to allow services such as water, gas and electricity supplies into the basement units, as well as drainage pipes.

As shown in Figures 2 and 4, the basement structure 22, and hence the building, is held in position in the body of water 24 by a number of locating piles 46. In this example, each locating pile 46 consists of a 600 mm diameter hollow steel pile, which is driven into the bed 27 of the body of water 24 adjacent to the location of the basement structure 22. Locating piles 46 are provided adjacent to at least two sides of the basement structure 22, although more piles 46 may be provided if required.

Pile guides 48 are attached to the outer surface of the basement structure 22, just above the water line. As is conventional, each pile guide 48 comprises one or more rubberised rollers (not shown) mounted on a galvanized steel frame. The frame of each pile guide 48 extends around one of the locating piles 46, and the rollers bear upon the outer surface of the associated pile 46. In this way, the basement structure 22, and hence the building, can rise or fall to accommodate changes in the water level. However, lateral or side-to-side motion of the basement structure 22 is prevented so that the building remains in the desired position in the body of water 24. It will be appreciated that the access ramps 28 and other connections between the building and the land are arranged to accommodate the rising and falling motion of the building.

It is to be noted that the locating piles 46 do not bear any significant vertical load from the building. Instead, the function of the locating piles 46 and the associated pile guides 48 is to resist lateral forces, for example from wind and from tidal flows or currents, that would otherwise cause the building to drift or rotate, whilst allowing the building to rise or fall in response to changes in the water level. The locating piles 46 may be partially or wholly filled with material such as concrete, sand or ballast to increase their resistance to lateral forces.

The height of the locating piles 46 is chosen to allow the building to rise and fall through the whole range of expected motion, with a suitable safety factor. For example, the top of the locating piles 46 may be one metre higher than the expected maximum water line under flood conditions.

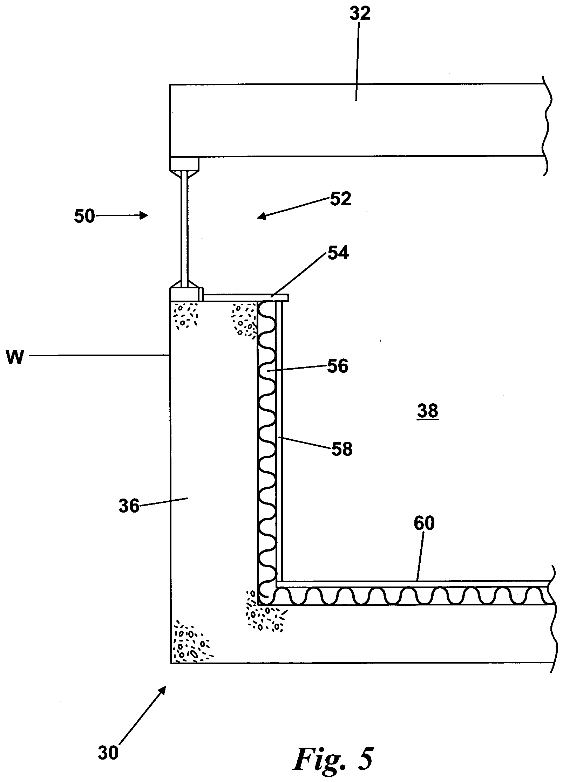

As shown in detail in Figure 5, the basement structure 22 is provided with window units 50 to allow natural light into the basement space 38. The window units 50 may also provide a ventilation path for the basement space 38. In one embodiment, the window units 38 are 600 mm high double-glazed units with powder-coated steel frames, although it will be appreciated that any suitable window units could be used within the context of the invention. The window units 50 are mounted in openings 52 in the walls 36 of the basement units 30 so that the base of the window unit 50 lies approximately 200 mm above the water line. It is, however, conceivable that the window units 50 could be mounted partly or wholly below the water line to provide underwater viewing windows.

The window units 50 are sealed in the openings 52 using silicone sealant. The tops of the window units 50 lie level with the tops of the side walls 36 of the basement units 30, and so the top of each window unit 50 is sealed against the transfer slab 32. It will be appreciated that the window units 50 are not load-bearing. Instead, the weight of the transfer slab 32 and the superstructure 20 is borne by the concrete walls 36 of the basement unit 30 around the window opening 52. The transfer slab 32 thus performs the function of a lintel, and so no separate lintel is required.

The thickness of the window unit 50 is substantially less than the thickness of the basement unit wall 36. A timber window cill 54 or board is provided to cover the horizontal surface of the window opening 52 in the basement unit 36 which would otherwise be exposed.

The inner surfaces of the basement units 30 are lined with an insulation layer 56. In the example shown in Figure 5, a 50 mm thick layer of expanded polystyrene insulation 56 is used both on the internal wall surfaces and the floor surface of each basement unit 30. The internal wall surfaces are lined with 12.5 mm thick gypsum plasterboard 58 and the floor surface is finished with concrete or a cement screed 60. The floor-to-ceiling height of the basement space 38 (i.e. from the floor finish 60 to the transfer slab 32) is typically 2.7 m, which is sufficient to create a large and airy basement room.

The transfer slab 32 provides a large, flat area upon which the superstructure 20 of the building is supported. Because the transfer slab 32 spans across the basement units 30, the transfer slab 32 spreads the weight of the superstructure 20 over all of the basement units 30 in all directions. Meanwhile, usable and accessible space is provided beneath the transfer slab 32 as described above.

Because the transfer slab 32 presents a structurally homogeneous base for support of the superstructure 20, the basement structure 22 allows a wide choice of methods for construction of the superstructure 20. For example, the superstructure 20 could be of conventional blockwork or brickwork construction, or it could have a structural steel or timber frame with closed non-load bearing panels of timber, steel or glass. Parts of the building could be clad with timber, steel, glass, or any combination of these or other materials. The roof structure may be pitched or flat or, as shown in Figures 1(a) to 2, a combination of both pitched and flat. The roof covering may be, for example, felt, bitumen, steelwork, or tiles such as lightweight concrete tiles or slates.

In the examples shown in Figures 1(a) to 2, the superstructure 20 comprises a structural steel frame with a timber cladding system. The intermediate floors are of lightweight concrete slab construction, similar to the transfer slab, and are capable of supporting the weight of several vehicles in a car park housed within the superstructure 20.

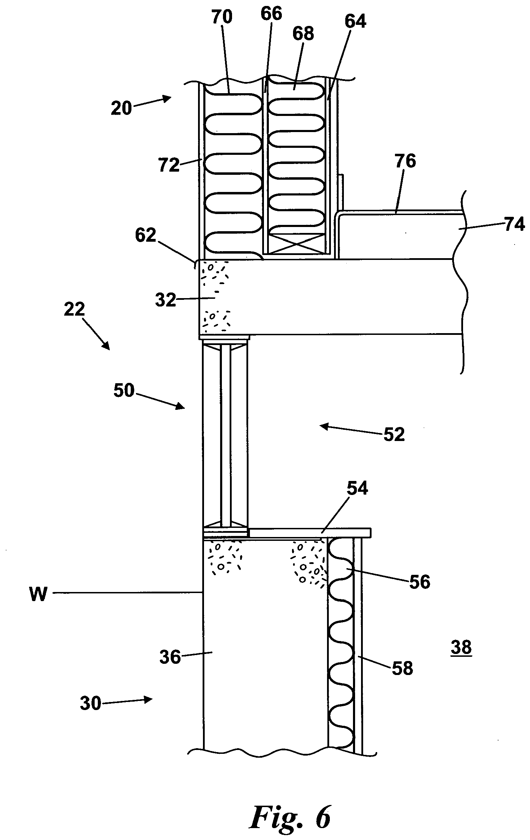

Figure 6 shows part of the superstructure 20 in place on top of the basement structure 22. A damp-proof membrane 62 is laid on top of the concrete transfer slab 32.

The wall structure in this example is of timber construction, and is formed as a multi-layer sandwich structure. Two 15 mm thick dry lining boards 64, 66 (such as those marketed under the registered trade mark Fermacell) are positioned approximately 140 mm apart. A first one 64 of these boards forms the internal surface of the wall, while a second one 66 of the boards lies approximately half-way through the wall. The gap between the boards is filled with insulation 68, such as Rockwool. The wall is completed by a 150 mm thick expanded polystyrene insulation layer 70 on the outermost surface of the second dry lining board 66. The expanded polystyrene insulation 70 is finished with a suitable rendering or cladding system 72.

The whole wall lies on top of the damp-proof membrane 62, and the timber frame (not shown in Figure 6) is bolted to the transfer slab 32 where necessary to secure the frame. The ground floor of the superstructure 20 comprises a screed 74 laid on the damp-proof membrane 62, and a floor finish 76 on top of the screed 74.

The dimensions of the superstructure 20 dictate the size of basement structure 22 required. As described above, the basement structure 22 is of modular construction. The size and number of basement units 30 can be varied according to the design and structural requirements of the building. In this way, basement structures 22 can be made to substantially any size and therefore the present invention allows construction of very large floating buildings. For example, buildings of four storeys or more in height are possible.

For stability, the weight of the superstructure 20 should be less than the total weight of the basement structure 22, including the basement units 30 and the transfer slab 32. In this way, the centre of gravity of the building is advantageously low: for example, the centre of gravity may lie at or around the second storey level of the building when the building is four storeys high.

Because the transfer slab 32 acts to distribute the weight of the superstructure 20 over all of the basement units 30, the superstructure 20 need not be located centrally on the transfer slab 32. Furthermore, there need be no correspondence in the position of the load-bearing walls or frame of the superstructure 20 with the position of the basement units 30 beneath the transfer slab 32. Adjustments can be made to the trim of the building by ballasting and/or at the design stage of the basement structure 22.

A ground-source heat system may be installed to provide heating, hot water or both to the building. In the example shown in Figure 2, boreholes 78 are drilled into the bed 27 at the base of the locating piles 46. The boreholes 78 receive pipework 80 which is connected to a ground-source heat pump, which may also be housed within the locating pile 46. A heat transfer manifold 82 is located within a wall panel of the superstructure 20 for transfer of heat to the building.

Wind turbines may be installed on the roof of the superstructure. For example, in Figures 1(a) to 2, wind turbines 84, 86 of the Darrieus and Savoinius types are shown. Similarly, electrical or thermal solar panels 88 may be mounted on the roof. In these ways, electricity and hot water can be supplied to the building to augment or replace external energy supplies.

Part of the basement space 38 within one or more basement units 30 may be devoted to water recycling facilities. For example, the basement structure 22 may house a sewage treatment plant 90, potable water tanks 92, and grey water recycling tanks 94.

A flexible service duct (not shown) is provided to allow connection of services such as gas, electricity, telephone, sewage and water from the land to the building. The service connections within the duct are themselves flexible. For example, for water and gas connections, flexible plastics pipework is employed. In this way, the service supply connections are arranged to accommodate any rising and falling motion of the building.

Construction of a building in accordance with the invention will now be described. In broad terms, construction involves casting the concrete basement units 30 on land, then launching the basement units 30 into the water. The basement units 30 are arranged into the desired configuration and linked together. The connected basement units 30 are then attached to the locating piles 46, which may be placed on site before or during construction of the building itself.

The transfer slab 32 is formed on top of the basement units 30. The building's superstructure 20 is then constructed on the transfer slab 32. Finally, access and service connections from the land to the building are put in place.

Each of the construction steps will now be described in more detail.

Casting of the concrete basement units 30 may be performed by a conventional process. Typically, an area of land large enough to accommodate a basement unit 30 is levelled and prepared. Compaction and reinforcement of the ground may be necessary to support the weight of the basement unit 30, for example by incorporating hardcore and geotextile materials into the earth. A sand blinding layer or sacrificial formwork may be laid over the ground for casting of the bottom surface of the basement unit 30. Once the casting site has been prepared, a matrix of reinforcing bars of an appropriate shape is constructed. The reinforcing bars may be welded or tied to one another to provide a temporarily self-supporting lattice of reinforcing bars. Plywood shuttering is used to define the vertical surfaces of the basement unit 30. Concrete is then poured between and around the reinforcing bars. The shuttering constrains the concrete so that the correct shape is formed. After pouring, the concrete cures over time. Typically, the design strength of the concrete is reached after around 28 days of curing.

Usually, each basement unit 30 is cast in a multi-stage process, in which concrete is first poured to form the base or floor 34 of the unit 30 and subsequently poured to form the upstanding walls 36. In this way, the initially-cast base 34 can support and distribute the weight of the walls 36. Similarly, and particularly if window or other openings are provided in the walls of the basement unit 30, concrete may be poured to form the walls 36 in two or more steps.

In some embodiments of the invention, a number of upwardly-extending reinforcing bars, sometimes known as kicker bars or starter bars, are left exposed above the top face of the walls of each basement unit 30. The end portions of these exposed reinforcing bars may be bent at 90 degrees to the upstanding portion. As will be explained in more detail later, these exposed reinforcing bars form part of the connection between the basement unit 30 and the transfer slab 32.

Once completed and fully cured, the cast basement units 30 must be transferred to the body of water 24 in which the building is to be constructed. A number of possible methods of transferring the basement units 30 will now be described, and it will be appreciated that the most appropriate method for a given building will depend upon the size and weight of the basement units 30, the proximity of the casting site to the body of water 24, and the nature of the bank or shoreline.

If the basement units 30 are relatively small and lightweight, and suitable access is available, a crane could be used to lift the basement units 30 into the water. Such a method would typically be suitable where the mass of each basement unit 30 does not exceed 140 tonnes, although larger-mass units could be lifted where suitable equipment is available.

An alternative approach is to cast the basement units 30 in the base of a dry dock. After curing, the dry dock can be flooded so that the basement units 30 float. The basement units 30 can then be towed to their final positions. This method is suitable when a dry dock which is large enough for the construction of the basement units 30 is available, or when a temporary dry dock can be created, and allows construction of basement units 30 with large mass. If possible, all of the required basement units 30 are constructed at the same time, but otherwise the basement units 30 may be constructed and floated one-by-one or in batches.

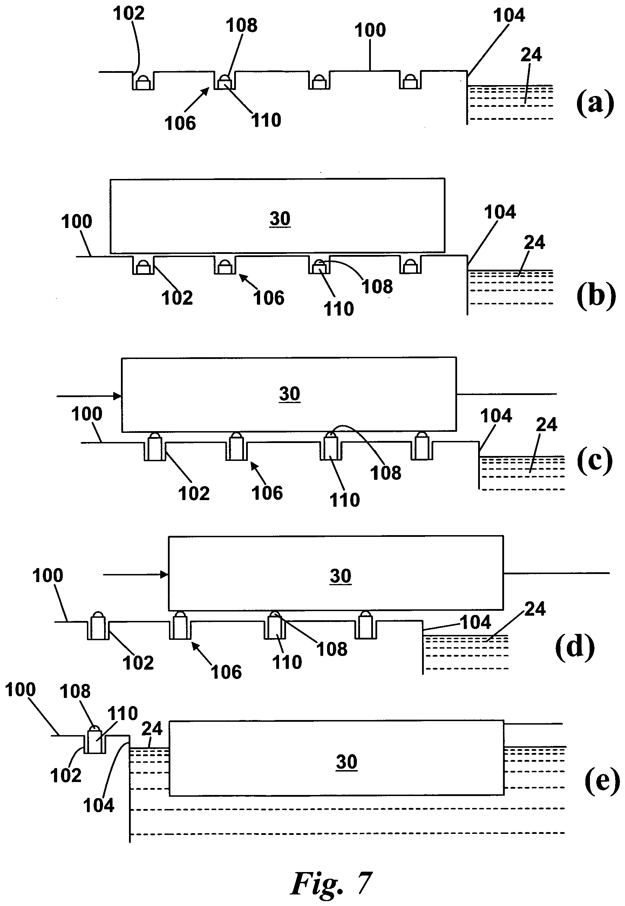

Figures 7 to 9 show one example of a launching system which is suitable for launching relatively heavy basement units 30 from a piece of flat, level land 100 adjacent to the body of water 24, where the land 100 lies just above the high water level.

As shown in Figure 7(a), a number of parallel trenches 102 are dug in the land 100. The trenches 102 lie parallel to the bank 104, and extend across the area where the basement unit 30 will be constructed. In this example, the trenches 102 are approximately 300 mm deep and 300 mm wide.

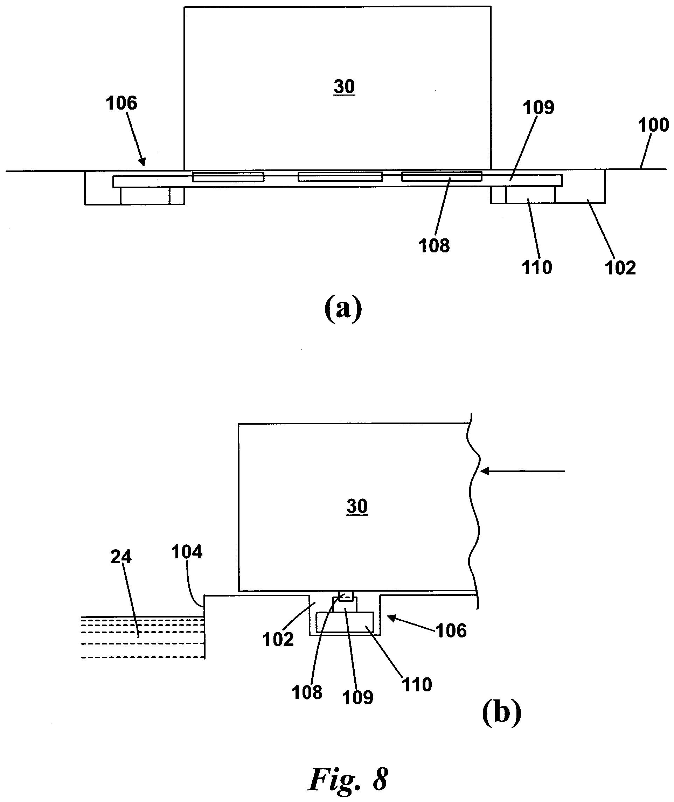

As shown additionally in Figures 8(a) and 8(b), roller devices 106 are placed in each of the trenches 102. Each roller device 106 comprises a number of roller mechanisms 108 mounted on a cross member 109, and air bags or bladders 110 which are inflatable to cause the cross member 109, and hence the roller mechanisms 108, to move vertically upwards. Initially, the bladders 110 are deflated, so that the roller mechanisms 108 lie within the trench 102, below the level of the ground 100.

Plywood shuttering (not shown) is arranged over the trenches 102 to cover the roller devices 106 and restore the flat ground level. A sand blinding layer (not shown) is then created over the site, and the basement unit 30 is cast as described above.

As shown in Figure 7(b), the completed cast basement unit 30 overlies the roller devices 106 in the trenches 102. After curing, the bladders 110 are inflated using a high-pressure air supply. This raises the roller mechanisms 108 to contact the bottom surface of the basement unit 30. Figure 8(a) shows this stage in more detail, viewed in cross-section in parallel with one of the trenches, and Figure 8(b) is a cross-sectional view similar to that of Figure 7(b).

As shown in Figure 7(c), as the bladders 110 are further inflated, the basement unit 30 is lifted above ground level 100 by the roller mechanisms 108. The roller mechanisms 108 are arranged to allow movement of the basement unit 30 towards the water.

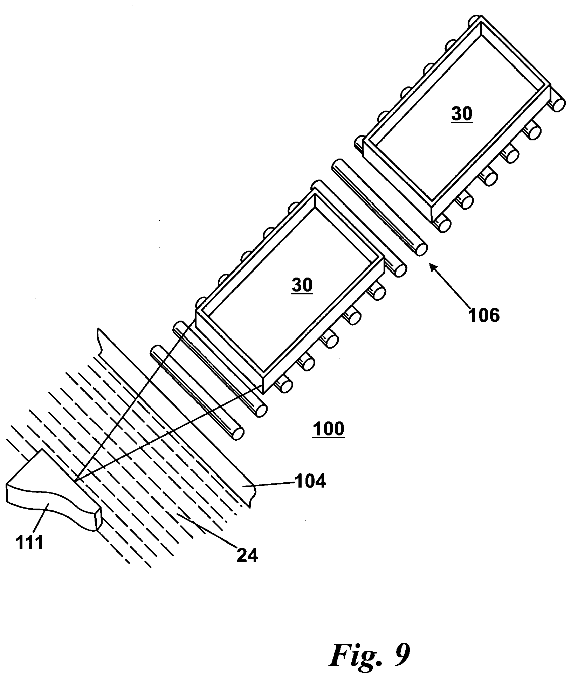

The basement unit 30 is then pushed and pulled towards the water by a land vehicle and a tug boat respectively, which work together to control the motion of the basement unit 30 during launching. As shown in Figure 7(d) and Figure 9, the basement unit 30 travels on the roller devices 106 towards and into the water 30. Figure 9 shows one basement unit 30 being pulled into the water by a tug boat 111, and another basement unit in position over the roller devices 106 awaiting launching. Figure 7(e) shows the basement unit 30 floating in the water 24 after launching. The basement unit 30 can then be moved to the desired location using a tug boat 111.

The launching method shown in Figures 7 to 9 is suitable where a flat piece of land 100 adjacent to the water is available, and has the advantage that the groundwork and excavation required is limited to forming the trenches 102 (assuming that the land is flat and level). Basement units weighing 250 tonnes or more can be launched by this method.

In each possible launching method, it may be necessary to construct the basement units 30 on a site away from the eventual location of the building and then transfer the basement units 30 to the water at that location. In such a case, the basement units 30 could be towed to the construction site by a tug boat or similar vessel. The basement units 30 can be designed to fit through any width or depth restrictions en route from the launch site to the construction site.

Once the basement units 30 are in the correct location, they are connected to one another. Conveniently, anchorage bolts used to attach tow lines for movement of the units 30 are used to make temporary connections. Permanent connections are then made between adjacent basement units 30. The nature of the connections between two basement units 30 depends upon the spacing between the units, as will now be described.

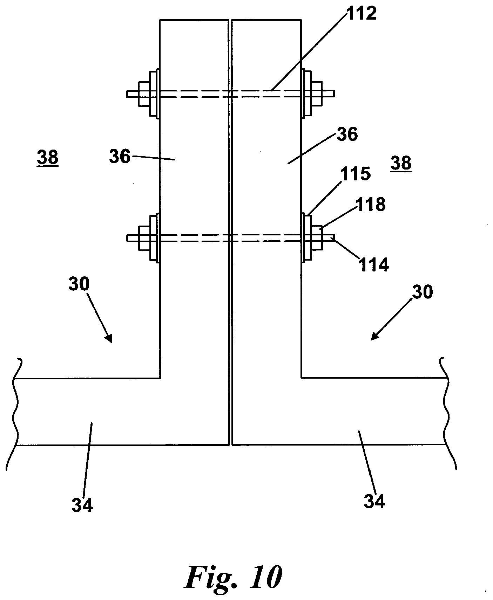

Figure 10 shows two basement units 30 which lie directly against one another, so that an outer wall of one basement unit 30 abuts the outer wall of a second basement unit 30. Horizontal holes 112 are drilled through the adjacent walls 36 of each basement unit 30, and threaded mild steel bars 114 are placed through the holes 112. The threaded bars 114 are secured on the internal surface of the walls 36 of the respective basement units 30 with steel plate washers 116 and nuts 118. Silicone sealant is used to fill the spaces between the holes 112 and the bars 114 and the washers 116 and the walls 36 in order to prevent leakage of water into the basement space 38.

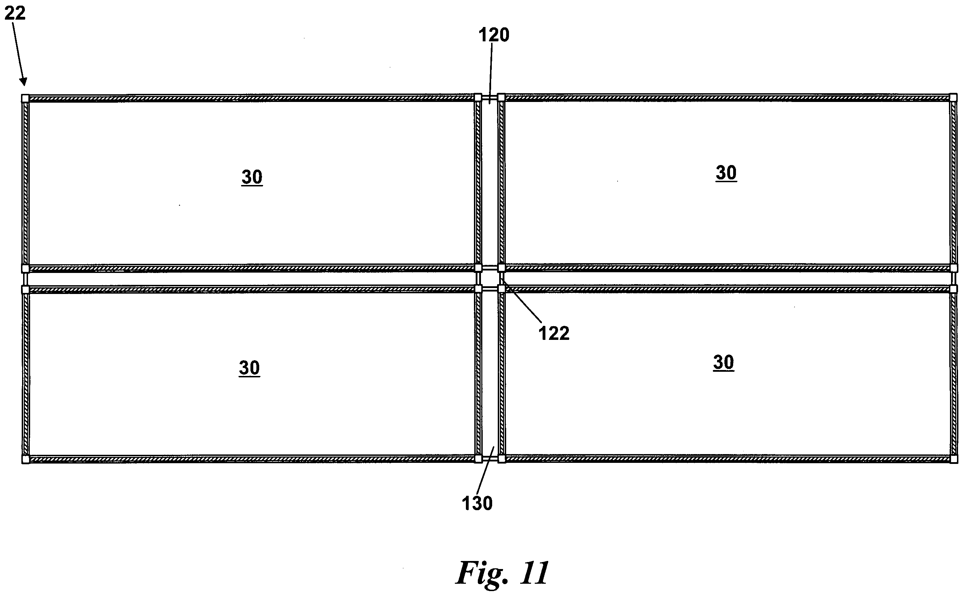

Figure 11 shows, in plan view, an alternative arrangement in which four basement units 30 are arranged in a 2 x 2 array and are spaced apart from each other to define gaps 120 between adjacent units 30. These gaps 120 may, for example, be used to provide diver access to the structure for maintenance or inspection, in which case the gaps 120 are preferably approximately 600 mm.

In this case, the basement units 30 are joined together by connecting elements, each of which comprises a galvanised mild steel framework attached to the corners of the basement units 30.

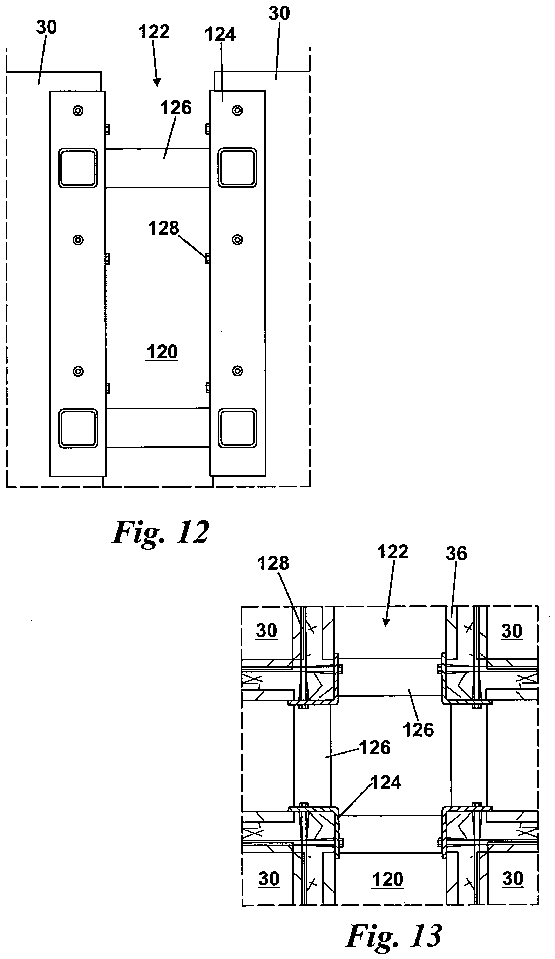

A central connecting element 122 connects all four of the basement units 30 together, and is shown in side sectional view in Figure 12 and in plan in Figure 13. The central connecting element 122 comprises four right-angled brackets 124 connected by two vertically-spaced sets of four horizontal members 126. The horizontal members 126 are formed of box-section steel and are welded to the brackets 124 so that each set of four members 126 forms a square in plan.

Each of the brackets 124 is attached to a corner of a respective basement unit 30 by means of six bolts 128. As can be seen most clearly in Figure 13, the bolts 128 extend into and are held firmly in the walls 36 of the basement units 30. The bolts that extend into one wall are offset from the bolts that extend into the adjacent wall of a basement unit, so that the bolts 128 do not foul one another.

Similar connecting elements 130 are used to connect the corners of two basement units 30 at the outer edges of the basement structure 22. In these cases, the connecting elements 130 comprise two brackets connected by two vertically-spaced horizontal members.

Once the basement units 30 are connected in the desired configuration, the transfer slab 32 is constructed by placing a plurality of pre-fabricated slab elements (such as the aforementioned BubbleDeck) on top of the basement units, and then pouring concrete on to the slab elements to form the transfer slab. In BubbleDeck applications, the slab elements comprise an array of spherical hollow void formers sandwiched between two meshes of reinforcing bars. The lowermost mesh is cast into a 65 mm-thick concrete slab base or 'biscuit'. A number of arrangements for placing and securing the slab elements onto the basement units 30 will now be described.

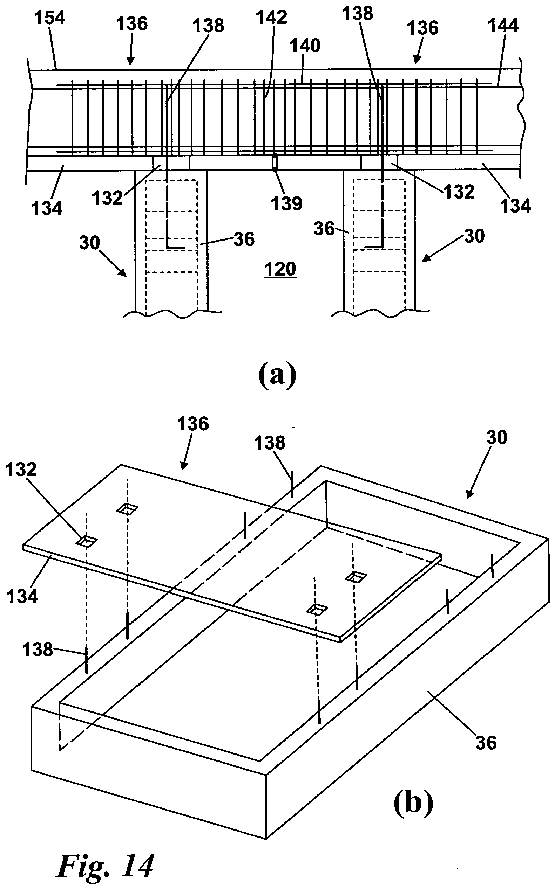

As shown in Figure 14(a), in a first arrangement, cut-outs 132 are provided in the slab base 134 close to one end of the slab element 136, and void formers (not shown in Figure 14, for clarity) are absent from the array above the cut-outs 132. In this case, upstanding exposed reinforcing bars 138 which emerge from the walls 36 of the basement units 30 are provided as described above.

As shown in Figures 13(b), a slab element 136 is lowered on to the assembly of basement units 30 so that the exposed reinforcing bars 138 of a basement unit 30 pass through the cut-outs 132 in the slab base 134 of the slab element 136. In this example, the basement units 30 are in a non-abutting configuration similar to that shown in Figure 11, and each slab element 136 overhangs the gap 120 between the basement units 30 so that the slab elements 136 meet, or almost meet, at the centre of the gap 120. The slab elements 136 are placed on a mortar bed on the tops of the walls 36 of the basement units 30. A compressible material 139 such as silicone sealant or mortar grout is inserted between the ends of the slab elements 136 to seal the gap that would otherwise exist, preventing subsequent seepage of concrete or grout through the joint.

In this way, the reinforcing bars 138 of the basement units 30 extend into the slab elements 136, and can be connected to the reinforcing bar mesh 144 of the slab elements 136 by welding or tying.

Additional reinforcing bars are placed in and around the junction between the slab elements 136. In particular, shear reinforcing bars 140 are placed above and below the void formers of both slab elements 136, and extend from one slab element 136 to the other. Vertical and horizontal link reinforcing bars 142 are also placed around the junction. The shear and link reinforcing bars 140, 142 are joined to the exposed reinforcing bars of the basement units 138, and the mesh reinforcement 144 of the slab elements 136.

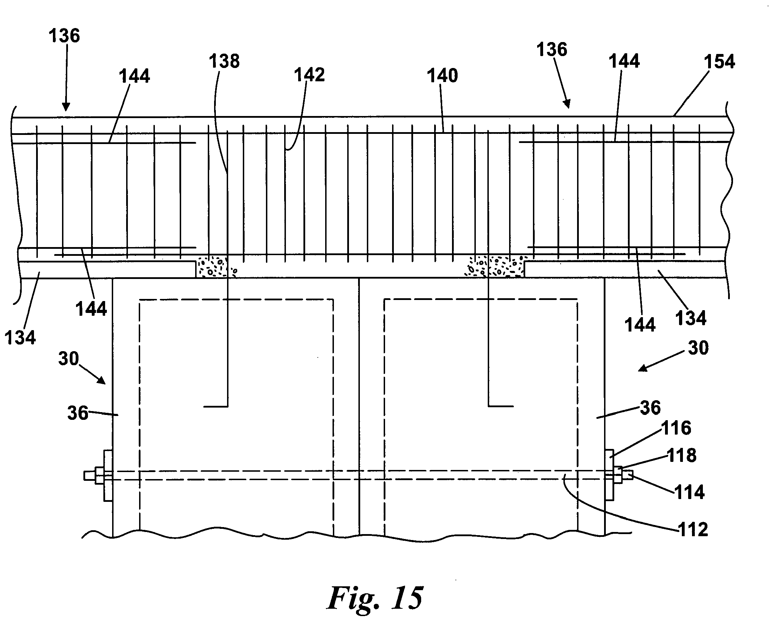

A second arrangement, shown in Figure 15, may be used when the basement units 30 are in abutting configuration akin to the arrangement shown in Figure 10. Again, upstanding exposed reinforcing bars 138 which emerge from the walls 36 of the basement units 30 are provided as described above. Figure 15 shows two slab elements 136 in place on top of abutting basement units 30. The slab elements 136 are set into mortar beds on the tops of the walls 36 of the basement units 30, leaving a gap between the ends of the slab elements 136. The exposed reinforcing bars 138 of the basement units 30 extend upwards into the gap.

Additional reinforcing bars are placed in and around the gap between the slab elements 136, in a similar manner to that described with reference to Figure 14(a). Shear reinforcing bars 140 are placed above and below the void formers (not shown in Figure 15) of both slab elements, and bridge the gap between the slab elements 136. Each shear reinforcing bar 140 overlaps each of the slab elements 136 by approximately 900 mm at opposing ends of the bar 140. Vertical and horizontal link reinforcing bars 142 are also placed into the gap. As before, the shear and link reinforcing bars 140, 142 are joined to the exposed reinforcing bars of the basement units 138, and the mesh reinforcement 144 of the slab elements 136.

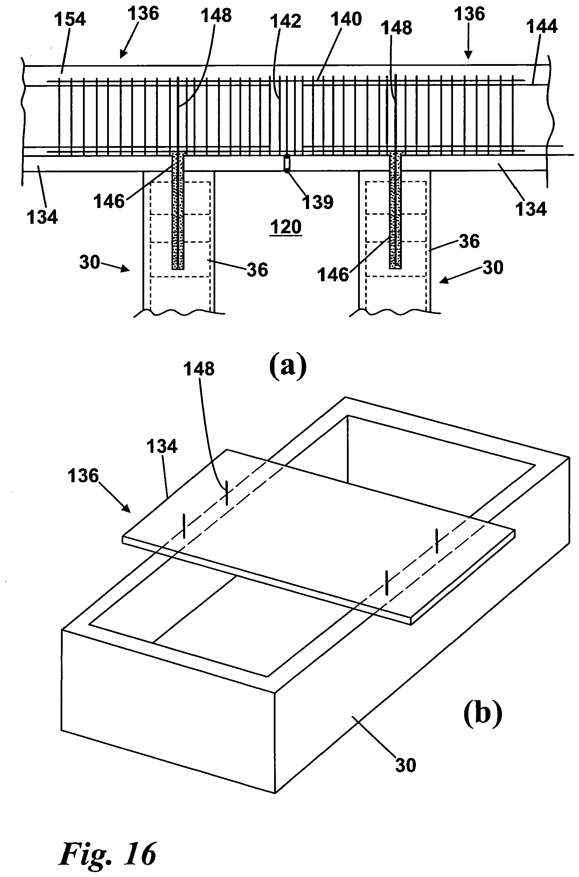

A third arrangement is shown in Figure 16. In this case, exposed reinforcing bars are not provided in the basement units 30. Here, slab elements 136 are laid on mortar beds on the tops of the walls 36 of non-abutting basement units 30 so that the ends of the slab elements 136 overhang the gap 120 between the basement units 30 and meet or almost meet in the centre of the gap 120.

Void formers (not shown in Figure 16 for clarity) are absent from the array in the slab elements 136 above the position of the basement unit walls 36. The void formers 42 may, for example, be removed on-site after placement of the slab elements 136.

Vertical holes 146 are then drilled through the slab base 134 of each slab element 136. The holes 146 extend into the walls 36 of the basement units 30. Vertical reinforcing bars 148 are then inserted through the holes 146 in the slab bases 134 and into the basement unit walls 36. Figure 16(b) shows a slab element 136 in place on a basement unit 30 after the vertical reinforcing bars 148 have been installed, with the reinforcing bar meshes and void formers of the slab elements omitted for clarity.

The vertical reinforcing bars 148 are tied or welded to the reinforcing bar meshes 144 of the slab elements 136, and are resin grouted in the holes 146 in the basement unit walls 36. In this example, the holes 146 are 35 mm in diameter and extend to a depth of 400 mm in the basement unit walls 36, and the vertical reinforcing bars 148 are 25 mm in diameter.

As described above, additional shear reinforcing bars 140 and link reinforcing bars 142 are then placed to bridge between the slab elements 136, and the shear reinforcing bars 140 are tied or welded to the reinforcing bar meshes 144 of the slab elements 136. A compressible material 139 such as silicone sealant or mortar grout is inserted between the ends of the slab elements 136 to seal the gap that would otherwise exist.

In all of these arrangements, the resulting structure is an arrangement of basement units 30 which support a platform of slab elements 136. Reinforcing bars 138, 148 extend vertically upwards from within the walls 36 of the basement units 30 into the slab elements 136, and are joined to the reinforcing bar arrangement 144 within the slab elements 136.

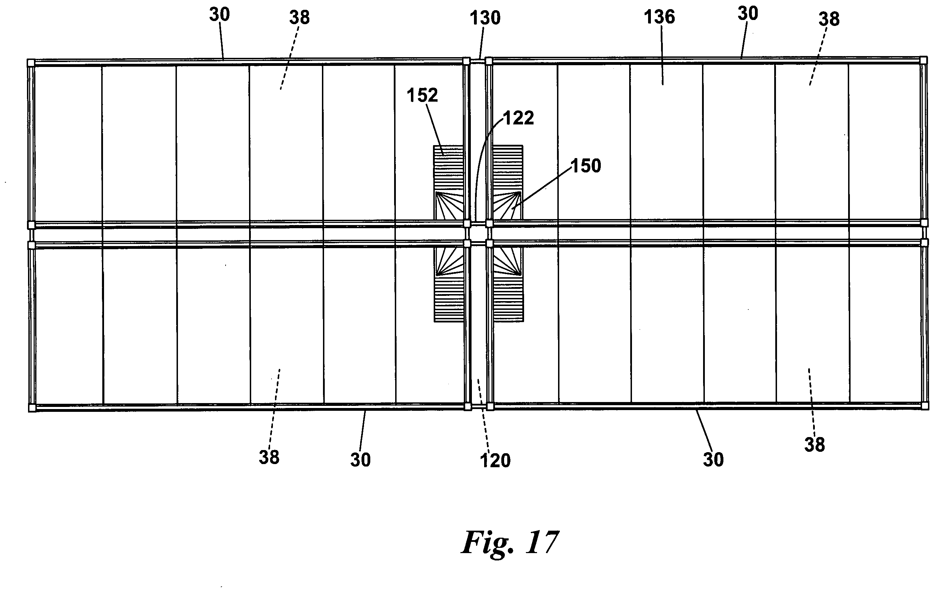

Figure 17 shows, in plan view, the position of twenty-six slab elements 136 on top of four non-abutting basement units 30. In this example, each basement unit 30 is approximately 18 metres in length and 7 metres in width. The gap 120 between the basement units 30 is 600 mm. Each slab element 136 is approximately 7.3 metres in length and approximately 3 metres in width. Four of the slab elements 136 are provided with openings 150 through which staircases 152 extend down into each of the four basement spaces 38. Such openings 150 are pre-made in the slab elements 136 before assembly on site.

The next construction step is to pour concrete on the slab elements 136 to form a uniform, flat transfer slab 32 upon which the superstructure 20 can be built. Typically, the transfer slab 32 will be 360 mm thick. Plywood formwork or shuttering is used to define the edges of the transfer slab 32 and to prevent leakage of concrete during pouring. Shuttering is also used to define openings 150 where they are required in the transfer slab. Gaps between adjacent slab elements 136 may be sealed with mortar, resin grout or a compressible material.

Concrete is poured onto the slab elements 136 in one operation, to a height of approximately 50 mm above the void formers 42 and upper reinforcing mesh 144 of the slab elements 136. The concrete is then vibrated, compacted, levelled and allowed to cure to form the transfer slab 32. Curing agents may be used to speed up the curing process. The top surface 154 of the cured concrete layer can be seen in Figures 14(a), 15 and 16(a).

Once the transfer slab 32 has cured, the superstructure 20 can be constructed on top of the transfer slab 32. As described above, many construction methods are suitable for building the superstructure 20. In one example, the superstructure 20 is pre-fabricated on land and then craned on to the transfer slab 32 in pieces for assembly and finishing. The superstructure 20 can be held on the transfer slab 32 by any suitable means, such as bolts or mortar. Reinforced concrete connections between the superstructure 20 and the transfer slab 32 may also be provided, in which downwardly-extending reinforcing bars of the superstructure 20 concrete are resin bonded into holes drilled in the transfer slab 32.

It will be appreciated that many modifications and variations of the embodiments described above lie within the scope of the invention.

For example, in the embodiments described above, the basement units comprise reinforced concrete walls constructed by casting concrete over a framework of reinforcing bars. Shuttering is used to define the outer surfaces of the walls, and the shuttering is removed after the concrete has set.

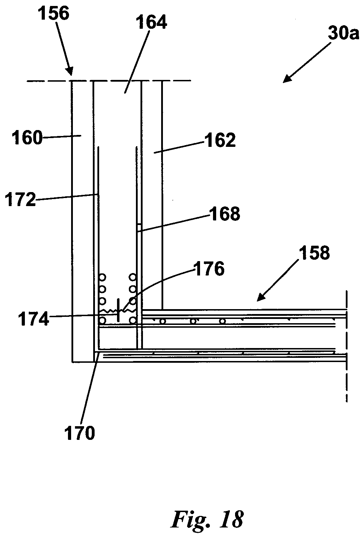

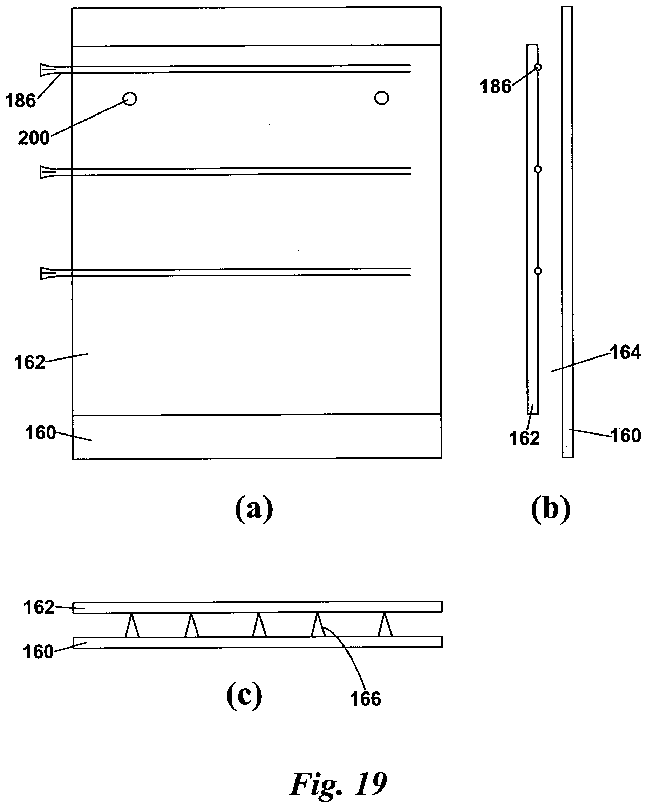

In another variant, the walls of the basement units are constructed using pre-cast concrete wall panels in place of the shuttering. Such construction systems are sometimes referred to as "twin wall" systems. Figure 18 is a vertical section through such a basement unit 30a, showing a corner where a wall 156 of the basement unit 30a meets the floor section 158, while Figures 19(a), 19(b) and 19(c) show the pre-cast panels 160, 162 in isolation.

As in previous embodiments, the floor section 158 is a reinforced concrete slab. In this case, however, the wall 156 comprises an outer panel 160 and inner panel 162 located parallel to and spaced apart from one another to define a 160 mm-thick core region 164 between the panels 160, 162. Each panel 160, 162 is a 70 mm-thick pre-cast concrete panel. During construction of the wall 156, the core region 164 is filled with reinforced concrete.

Some reinforcement in the core region 164 extends from one panel to the other so as to connect the panels 160, 162 and to maintain the desired spacing between them. Preferably, this connecting reinforcement comprises reinforcing bars (166 in Figure 19(b)) which are embedded in the panels 160, 162 as they are cast, so as to create a pre-cast wall unit comprising two panels 160, 162 connected to one another by reinforcing bars 166 as shown most clearly in Figure 19(b).

Some reinforcing bars extend into both the core region 164 of the wall 156 and the floor section 158, so as to create a strong connection between the wall 156 and the floor section 158. In Figure 18, for example, U-shaped reinforcing bars 168 having a horizontal cross member 170 and two upwardly-extending legs 172 are provided. The cross member 170 is embedded in the concrete of the floor section 158, while the legs 172 extend partially into the core region 164 of the wall. The legs 172 are approximately 900 mm in length in this example, and extend approximately 750 mm into the core region 164.

As shown most clearly in Figure 19(b), the outermost panel 160 is larger than the innermost panel 162 to overlap the top and bottom edges of the innermost panel 162. In this way, as shown in Figure 18, the outermost panel 160 covers the edge surface of the floor section 158, while the innermost panel 162 rests on the upper surface of the floor section 158.

Referring again to Figure 18, a neoprene rubber strip, known as a water bar 174, is provided where the core region 164 and the floor section 158 meet. The water bar 174 runs the length of the side of the basement unit 30a, and serves to prevent water seepage into the basement space across the interface 176 between the concrete of the floor section 158 and the concrete of the core region 164. The water bar 174 may be set into the concrete of the floor section 158 during casting of the floor section 158, or instead may be fixed into a slot machined into the floor section 158 after it has been cast. The water bar 174 is therefore in place when the concrete of the core region 164 is poured.

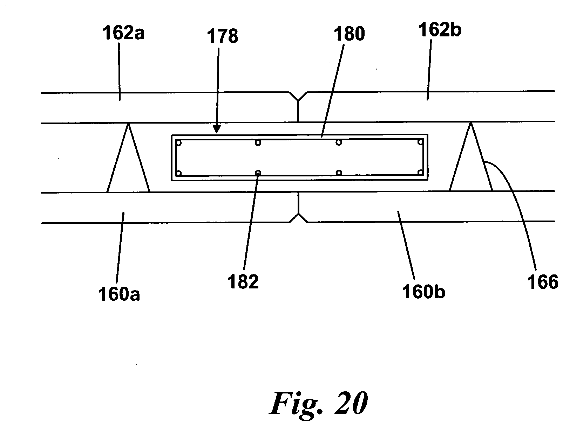

When the desired length of a basement unit wall exceeds the convenient width of a single pre-cast panel, the wall can be constructed using a number of pre-cast panel sections assembled side-by-side. As shown in plan view in Figure 20, in such a case extra reinforcement 178 is installed in the core region where a first pair of panels 160a, 162a meet a second pair of panels 160b, 162b. In this example, the extra reinforcement 178 comprises a number of vertically-spaced reinforcing loops 180 (only one of which is visible in Figure 20) arranged around an array of eight vertical reinforcing bars 182.

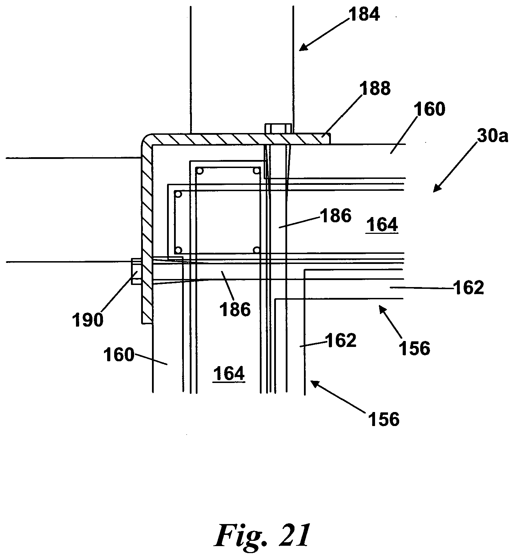

Figure 21 shows a horizontal section through a corner of a basement unit 30a where two walls 156 meet. A connecting element 184, similar to that shown in Figures 12 and 13, is mounted on the corner of the basement unit 30a. As shown most clearly in Figures 19(a) and 19(b), horizontal bars 186 are set into the innermost surface of the inner panel 162 of each of the basement unit walls 156. These horizontal bars 186 extend beyond the edges of the inner panels 162 at the corner of the basement unit 30a, so that the bracket 188 of the connecting element 184 can be attached to the bars 186, and hence to the walls 156, by means of nuts 190 or other suitable fixings.

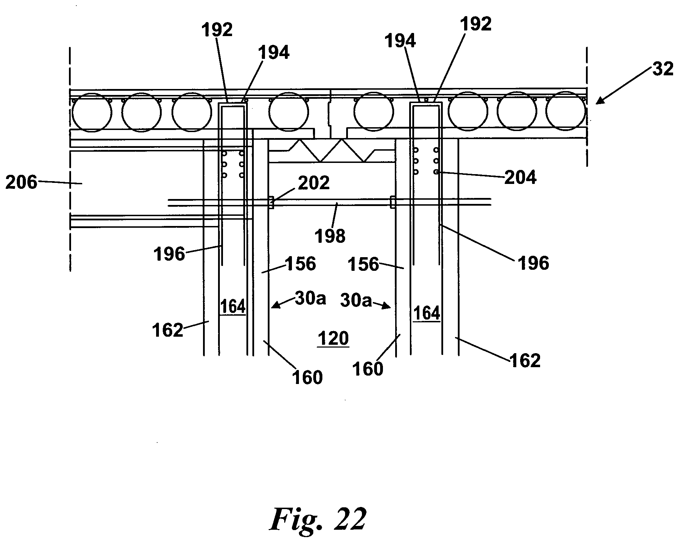

Figure 22 shows a transfer slab 32 comprising two transfer slab elements atop two non-abutting basement units 30a. In this case, U-shaped reinforcing bars or ties 192 extend across the junction between the transfer slab 32 and each basement unit wall 156. Each tie 192 comprises a horizontal cross member 194 located in the transfer slab 32 and vertically-extending legs 196 which are located partly in the transfer slab 32 and partly in the core region 164 of the wall 156. As in previous embodiments of the invention, the ties 192 form part of the reinforcement of the concrete in the transfer slab 32 and the basement unit walls 156, and serve to securely connect the transfer slab 32 to each of the basement units 30a.

A connecting element comprising a threaded bar 198 extends across the gap 120 between the two adjacent basement units 30a to connect the basement units 30a to one another. The connecting bar 198 extends through the walls 156 of the basement units 30a. For this purpose, pre-cast holes 200 are provided in the panels 160, 162 of the walls 156, as shown in Figure 19(a). The connecting bar 198 is secured in place using suitable nuts 202 or other fasteners, and serves to maintain the relative positions of the basement units 30a during construction of the base. By inserting the bar 198 through the walls 156 before the core regions 164 are filled with concrete, the connecting bar 198 can be incorporated into and optionally connected to the reinforcing framework 204 in the core region 164.

A transfer slab support element is also shown in Figure 22. The support element comprises a beam 206 of reinforced concrete which spans across a basement unit 30a to transfer load from the transfer slab 32 to the basement unit walls 156. Such an arrangement may be advantageous when the basement units 30a are large and hence the span between the walls 156 is great. The beam 206 is located in a cut-out (not shown) in the inner panel 162 of the wall 156 of one of the basement units 30a, and extends into the core region 164 of the wall 156. It will be appreciated that such beams or similar support elements could be incorporated into previously-described embodiments of the invention.

It is conceivable that the floating base may comprise a single basement unit. Where more than one basement unit is provided, the basement units in a single basement structure may be of different sizes. To ensure the tops of the basement units are arranged to lie in the same plane, substantial additional ballast weight may be provided. The floor or wall thickness of a basement unit may be increased to provide additional ballast weight where necessary.

Where basement units abut one another, access routes between the basement units may be provided by way of openings formed in the walls of the basement units, with silicone sealant or other sealing means provided between the basement units around the openings to prevent water inflow.

Instead of steel piles, other locating means could be used such as concrete piers. Where the situation allows, the locating means on the shore or bank side of the building could be a land-based structure, such as a quay or harbour wall.

The access ramps or bridges may be connected to a walkway or terrace which surrounds the building just above the water line. The walkway forms a barrier which helps to block or diffuse surface motion of the water, such as waves or wash from passing vessels. Similarly, if the access ramps or bridges connect to the building above basement or ground-floor level, then a low-level walkway, accessed via the interior of the building, may be provided just above the water line to act as a wave barrier. In either case, the walkway is preferably connected to the basement units by galvanised steel frame brackets.

Where a walkway is provided close to the water line, boat mooring capstans or similar structures may be provided to enable water craft to moor alongside the structure.

## Claims

1. A floating base for a building, the base comprising:
at least one buoyant basement unit (30) defining a basement level; and
a reinforced concrete transfer slab (32) atop the or each basement unit,
wherein the transfer slab (32) has at least one access opening giving access to the basement level,
the basement level providing habitable space for the building; and **characterised in that** one or more basement units (30)includes one or more window openings (52) for receiving windows,
wherein the transfer slab (32) forms a lintel above the or each window opening (52).

2. The floating base of Claim 1, wherein at least one window opening (52) provides ventilation to the basement level.

3. The floating base of any of Claims 1 or claim 2, wherein the or each window opening (52) is at least 200 mm above the water line in use of the base.

4. The floating base of any preceding claim, further comprising a breakwater attached to the exterior of one or more basement units (30).

5. The floating base of Claim 4, wherein the breakwater is located just above the waterline in use of the base.

6. The floating base of Claim 4 or Claim 5, wherein the breakwater forms a walkway around a part or all of the base.

7. The floating base of any preceding Claim, comprising at least two buoyant basement units (30) and wherein each of the basement units is independently buoyant for assembly with at least one other basement unit during construction of the base, said basement units thereby assuming a final position in which said units are closely adjacent or in contact to define a basement level comprising two or more of said units.

8. The floating base of Claim 7, wherein at least two of the basement units (30) are adjacent to one another and a gap is defined therebetween.

9. The floating base of Claim 8, wherein the adjacent basement units (30) are connected across the gap by connection means.

10. The floating base of Claim 9, wherein the connection means comprise a plurality of connection members (122) attached to the adjacent basement units (30).

11. The floating base of Claim 10, wherein the connection members (122) are arranged in a frame comprising at least two vertically-spaced horizontal members which span the gap between the adjacent basement units (30).

12. The floating base of Claim 11, wherein the frame comprises two or more vertically- extending brackets (124) for attachment to the respective adjacent basement units (30).

13. The floating base of Claim 11 or Claim 12, wherein the frame is attached to the basement units (30) with bolts which extend into walls of the basement units.

14. The floating base of any of Claims 8 to 13, wherein the gap is at least approximately 300 mm wide.

15. The floating base of Claim 14, wherein the gap defines a passage for access to the adjacent basement units (30) and the transfer slab (32).

16. The floating base of Claim 15, wherein the gap is approximately 600 mm wide.

17. The floating base of any of Claims 7 to 16, wherein at least two of the basement units (30) are in contact.

18. The floating base of Claim 17, wherein the contacting basement units (30) are connected to one another by connection means (122).

19. The floating base of Claim 18, wherein the connection means (122) comprises one or more connection members (124) which extend through adjacent walls of the contacting basement units (30).

20. The floating base of Claim 19, wherein the connection members (124) comprise threaded bars and associated nuts which clamp the contacting basement units (30) together.

## Patentansprüche

1. Schwimmendes Fundament für ein Gebäude, wobei das Fundament Folgendes aufweist:
mindestens eine schwimmende Untergeschosseinheit (30), die ein Untergeschoss-Stockwerk definiert; und
eine Stahlbeton-Übergangsplatte (32) auf der einen oder einer jeden Untergeschosseinheit,
wobei die Übergangsplatte (32) mindestens eine Zugangsöffnung aufweist, die Zugang in das Untergeschoss-Stockwerk ermöglicht,
wobei das Untergeschoss-Stockwerk eine bewohnbare Fläche für das Gebäude bereitstellt; und
**dadurch gekennzeichnet, dass** eine oder mehrere Untergeschosseinheiten (30) eine oder mehrere Fensteröffnungen (52) zum Aufnehmen von Fenstern einschließen,
wobei die Übergangsplatte (32) einen Fenstersturz über der oder einer jeden Fensteröffnung (52) bildet.

2. Schwimmendes Fundament nach Anspruch 1, wobei mindestens eine Fensteröffnung (52) eine Belüftung für das Untergeschoss-Stockwerk bereitstellt.

3. Schwimmendes Fundament nach einem der Ansprüche 1 oder 2, wobei die eine oder eine jede Fensteröffnung (52) mindestens 200 mm über der Wasserlinie bei Verwendung des Fundaments liegt.

4. Schwimmendes Fundament nach einem der vorhergehenden Ansprüche, das ferner einen Wellenbrecher aufweist, der an der Außenseite der einen oder der mehreren Untergeschosseinheiten (30) befestigt ist.

5. Schwimmendes Fundament nach Anspruch 4, wobei der Wellenbrecher knapp über der Wasserlinie bei Verwendung des Fundaments positioniert ist.

6. Schwimmendes Fundament nach Anspruch 4 oder Anspruch 5, wobei der Wellenbrecher einen Fußweg um einen Teil des Fundaments oder das gesamte Fundament bildet.

7. Schwimmendes Fundament nach einem der vorhergehenden Ansprüche, das mindestens zwei schwimmende Untergeschosseinheiten (30) aufweist, und wobei jede der Untergeschosseinheiten für eine Montage mit mindestens einer anderen Untergeschosseinheit während der Konstruktion des Fundaments unabhängig voneinander schimmt, wodurch die Untergeschosseinheiten eine endgültige Position annehmen, in welcher die Einheiten eng aneinander angrenzen oder in Kontakt sind, um ein Untergeschoss-Stockwerk zu definieren, das zwei oder mehr der Einheiten aufweist.

8. Schwimmendes Fundament nach Anspruch 7, wobei mindestens zwei der Untergeschosseinheiten (30) aneinander angrenzen und ein Spalt dazwischen definiert ist.

9. Schwimmendes Fundament nach Anspruch 8, wobei die angrenzenden Untergeschosseinheiten (30) über den Spalt durch Verbindungsmittel verbunden sind.

10. Schwimmendes Fundament nach Anspruch 9, wobei die Verbindungsmittel eine Mehrzahl von Verbindungselementen (122) aufweisen, die an den angrenzenden Untergeschosseinheiten (30) befestigt sind.

11. Schwimmendes Fundament nach Anspruch 10, wobei die Verbindungselemente (122) in einem Rahmen angeordnet sind, der mindestens zwei vertikal beabstandete horizontale Elemente aufweist, die den Spalt zwischen den angrenzenden Untergeschosseinheiten (30) überspannen.

12. Schwimmendes Fundament nach Anspruch 11, wobei der Rahmen zwei oder mehr sich vertikal erstreckende Klammern (124) zur Befestigung an den entsprechenden angrenzenden Untergeschosseinheiten (30) aufweist.

13. Schwimmendes Fundament nach Anspruch 11 oder Anspruch 12, wobei der Rahmen an den Untergeschosseinheiten (30) mit Bolzen befestigt ist, die sich in Wände der Untergeschosseinheiten erstrecken.

14. Schwimmendes Fundament nach einem der Ansprüche 8 bis 13, wobei der Spalt mindestens ungefähr 300 mm breit ist.

15. Schwimmendes Fundament nach Anspruch 14, wobei der Spalt einen Durchgang für Zugriff auf die angrenzenden Untergeschosseinheiten (30) und die Übergangsplatte (32) definiert.

16. Schwimmendes Fundament nach Anspruch 15, wobei der Spalt ungefähr 600 mm breit ist.

17. Schwimmendes Fundament nach einem der Ansprüche 7 bis 16, wobei mindestens zwei der Untergeschosseinheiten (30) in Kontakt sind.

18. Schwimmendes Fundament nach Anspruch 17, wobei die in Kontakt stehenden Untergeschosseinheiten (30) über Verbindungsmittel (122) miteinander verbunden sind.

19. Schwimmendes Fundament nach Anspruch 18, wobei das Verbindungsmittel (122) ein oder mehrere Verbindungselemente (124) aufweist, die sich durch angrenzende Wände der in Kontakt stehenden Untergeschosseinheiten (30) erstrecken.

20. Schwimmendes Fundament nach Anspruch 19, wobei die Verbindungselemente (124) Gewindestangen und zugehörige Muttern aufweisen, die die in Kontakt stehenden Untergeschosseinheiten (30) zusammenklemmen.

## Revendications

1. Base flottante pour un bâtiment, la base comprenant :
au moins une unité de soubassement flottante (30) qui définit un niveau de soubassement ; et
une dalle de transfert en béton renforcée (32) au-dessus de la ou de chaque unité de soubassement,
dans laquelle la dalle de transfert (32) possède au moins une ouverture d'accès qui donne accès au niveau de soubassement,
le niveau de soubassement offrant un espace habitable pour le bâtiment ; et
**caractérisée en ce que**
une ou plusieurs unités de soubassement (30) comprend/comprennent une ou plusieurs ouvertures de fenêtres (52) destinées à recevoir des fenêtres,
dans laquelle la dalle de transfert (32) forme un linteau au-dessus de la ou de chaque ouverture de fenêtre (52).

2. Base flottante selon la revendication 1, dans laquelle au moins une ouverture de fenêtre (52) assure la ventilation du niveau de soubassement.

3. Base flottante selon l'une quelconque de la revendication 1 ou de la revendication 2, dans laquelle la ou chaque ouverture de fenêtre (52) se trouve à au moins 200 mm au-dessus de la ligne de flottaison lors de l'utilisation de la base.

4. Base flottante selon l'une quelconque des revendications précédentes, qui comprend en outre un brise-lames fixé sur l'extérieur d'une ou plusieurs unités de soubassement (30).

5. Base flottante selon la revendication 4, dans laquelle le brise-lames est situé juste au-dessus de la ligne de flottaison pendant l'utilisation de la base.

6. Base flottante selon la revendication 4 ou la revendication 5, dans laquelle le brise-lames forme un passage autour d'une partie ou de l'intégralité de la base.

7. Base flottante selon l'une quelconque des revendications précédentes, qui comprend au moins deux unités de soubassement flottantes (30), et dans laquelle chacune des unités de soubassement est indépendamment flottante afin de s'assembler avec au moins une autre unité de soubassement pendant la construction de la base, lesdites unités de soubassement adoptant ainsi une position finale dans lesquelles lesdites unités sont étroitement adjacentes ou en contact de façon à définir un niveau de soubassement qui comprend deux ou plusieurs desdites unités.

8. Base flottante selon la revendication 7, dans laquelle au moins deux des unités de soubassement (30) sont adjacentes l'une à l'autre, et un espace est défini entre celles-ci.

9. Base flottante selon la revendication 8, dans laquelle les unités de soubassement adjacentes (30) sont reliées au sein de l'espace par des moyens de raccordement.

10. Base flottante selon la revendication 9, dans laquelle les moyens de raccordement comprennent une pluralité d'éléments de raccordement (122) fixés sur les unités de soubassement adjacentes (30).

11. Base flottante selon la revendication 10, dans laquelle les éléments de raccordement (122) sont disposés dans un châssis qui comprend au moins deux éléments horizontaux espacés verticalement qui comblent l'espace entre les unités de soubassement adjacentes (30).

12. Base flottante selon la revendication 11, dans laquelle le châssis comprend deux supports s'étendant verticalement ou plus (124) destinés à être reliés aux unités de soubassement adjacentes respectives (30).

13. Base flottante selon la revendication 11 ou la revendication 12, dans laquelle le châssis est relié aux unités de soubassement (30) à l'aide d'écrous qui s'étendent dans les parois des unités de soubassement.

14. Base flottante selon l'une quelconque des revendications 8 à 13, dans laquelle l'espace mesure environ au moins 300 mm de large.

15. Base flottante selon la revendication 14, dans laquelle l'espace définit un passage qui permet d'accéder aux unités de soubassement adjacentes (30) et à la dalle de transfert (32).

16. Base flottante selon la revendication 15, dans laquelle l'espace mesure environ 600 mm de large.

17. Base flottante selon l'une quelconque des revendications 7 à 16, dans laquelle au moins deux des unités de soubassement (30) sont en contact.

18. Base flottante selon la revendication 17, dans laquelle les unités de soubassement en contact (30) sont reliées les unes aux autres par des moyens de raccordement (122).

19. Base flottante selon la revendication 18, dans laquelle les moyens de raccordement (122) comprennent un ou plusieurs éléments de raccordement (124) qui s'étendent dans les parois adjacentes des unités de soubassement en contact (30).

20. Base flottante selon la revendication 19, dans laquelle les éléments de raccordement (124) comprennent des barres filetées et des écrous associés qui fixent les unités de soubassement en contact (30) ensemble.
